# EUROPÄISCHE PATENTSCHRIFT

(11) **EP 1 029 622 B1**
(45) Veröffentlichungstag und Bekanntmachung des Hinweises auf die Patenterteilung: **23.08.2006**
(21) Anmeldenummer: 00102777.0
(22) Anmeldetag: 10.02.2000
(51) Int. Cl.: B23B 51/02

(54) **Steinbohrer**
Stone drill
Foret pour la pierre

(30) Priorität: 15.02.1999 DE 29902665 U
(43) Veröffentlichungstag der Anmeldung: 23.08.2000
(73) Patentinhaber: DreBo Werkzeugfabrik GmbH, 88361 Altshausen (DE)
(72) Erfinder: Dreps, Klaus, c/o DreBo Werkzeugfabrik GmbH, 88361 Altshausen (DE); Uebele, Klemens, c/o DreBo Werkzeugfabrik GmbH, 88361 Altshausen (DE)
(74) Vertreter: Baronetzky, Klaus

(56) Entgegenhaltungen:
- EP-A- 0 761 927
- EP-A- 0 836 919
- US-A- 3 674 101

## Beschreibung

Die Erfindung betrifft einen Steinbohrer, gemäß dem Oberbegriff von Anspruch 1.

Ein derartiger Steinbohrer ist beispielsweise aus der EP 0 761 927 A1 bekannt. Bei diesem Bohrer ist eine Hartmetallplatte vorgesehen, die sich in an sich bekannter Weise quer durch die Bohrerspitze erstreckt und dort verankert ist. Diese Hartmetallplatte weist eine Hartmetallspitze auf, die gegenüber den schrägen Schneidflächen der Hartmetallplatte vorspringt. Hiermit soll eine bessere Zentrierung des Hartmetallbohrers beim Bohransatz erreicht werden.

Im Leistungsbereich von Schlagbohrern vermag diese spezielle Hartmetallspitze tatsächlich eine bessere Zentrierung gerade beim Ansetzen des Bohrers zu gewährleisten. Allerdings wird dieser Vorteil mit dem Nachteil erkauft, dass die Hartmetallplatte nicht nur schneller verschleißt, sondern insbesondere auch leichter zum Brechen neigt.

Zwar ist die Belastung bei Schlagbohrmaschinen, für welche der Bohrer gemäß der EP 0 761 927 A1 bestimmt ist, noch beherrschbar. Wenn jedoch ein entsprechender Bohrer für Hammerbohrmaschinen eingesetzt wird, ist der Verschleiß zum einen erheblich größer, zum anderen neigt die Hartmetallspitze aber dazu, bereits nach kurzer Zeit abzusplittern, so dass der Vorteil der Zentrierung, der bei einem neuen Bohrer besteht, rasch zunichte gemacht wird.

Ferner ist es bereits bekannt geworden, die Schneidkontur einer Hartmetallplatte nicht je gerade verlaufen zu lassen, sondern mehrere wellenförmige Abwinklungen vorzunehmen. In der EP 0 836 919 A1 wird eine solche Hartmetallplatte beschrieben, die in der Seitenansicht zwei symmetrische sägezahnförmige Schneiden aufweist. Zwar ist ein derartiger Bohrer auch für Hammerbohrer geeignet, wenn ein zu starkes Vorsprungmaß vermieden wird. Doch entsteht bei einem derartigen Bohrer eine längere Anliegelinie, so daß die Flächenpressung reduziert und dementsprechend der Bohrfortschritt vermindert wird. Ein derartiger Bohrer hat sich daher nicht durchgesetzt.

Daher liegt der Erfindung die Aufgabe zugrunde, einen Steinbohrer gemäß dem Oberbegriff von Anspruch 1 zu schaffen, der einen guten Bohrfortschritt mit einer hohen Bohrleistung auch bei Verwendung in leistungsstarken Hammerbohrmaschinen zeigt, ohne daß der Verschleiß erhöht wäre, wobei dennoch eine verbesserte Zentrierleistung gegeben sein soll.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, daß die Hartmetallspitze vollständig in der Kontur der Hartmetallplatte, die durch die Hüllkurve mit dem Spitzenwinkel von etwa 130 Grad gebildet wird, aufgenommen ist. Dadurch ergibt sich eine besonders gute seitliche Abstützung über die Bohrerspitze, und es besteht nicht die Gefahr, daß auch bei harter Belastung Teile der Hartmetallspitze abbröckeln. Dennoch ergibt sich eine gute Zentrierfunktion, wobei der Spitzenwinkel der Hartmetallspitze von 90 Grad die Zentrierfunktion unterstützt.

Trotz dieser Vorteile kann mit einer vergleichsweise kurzen Anliegelinie gearbeitet werden, nachdem die Hartmetallplatte mit einer Haupt- und einer Nebenschneidkante arbeitet, und die Hauptschneide vollständig in der Hartmetallspitze aufgenommen sein kann.

Erfindungsgemäß besonders günstig ist es, daß durch die besondere Form der Schneidenkontur der Hartmetallplatte eine Zentrierfunktion gegeben ist, aber dennoch der erfindungsgemäße Steinbohrer unempfindlich auch für das Anbohren auch von Kieselsteineinschlüssen oder der Armierung in Beton ist. Die Hartmetallspitze ist sehr gut in dem umgebenden Stahl des Bohrers abgestützt, so daß auch bei starker seitlicher bzw. schräger Belastung nicht die Gefahr besteht, daß die Zentrierspitze oder Hartmetallspitze abbricht.

Gemäß einem besonders bevorzugten Gesichtspunkt ist es vorgesehen, daß die Hartmetallspitze vollständig innerhalb der Hüllkurve verbleibt, also den durch das Drehen des Bohrers aufgespannten Spitzenkonus von 130 Grad an keiner Stelle durchdringt, und dennoch die Hartmetallspitze ausgeprägt, beispielsweise mit einem spitzen Winkel von 90 Grad, ausgebildet ist. Der recht kleine Spitzenwinkel der Hartmetallspitze führt zur guten Zentrierwirkung, und die Beibehaltung der Hüllkurve führt nicht nur zur verbesserten Abstützung, sondern insbesondere auch zu einer Erleichterung bei der Herstellung, indem nämlich die bereits bestehenden Formen für die Zuführung und das Handling von Hartmetallplatten in den bestehenden automatischen Montageeinheiten verwendet werden können.

Erfindungsgemäß besonders günstig ist es, wenn die Einschnürung rings um die Hartmetallspitze die Schneidenkontur nur in geringem Maße verlängert und insbesondere die radiale Länge der Einschnürung im wesentlichen der Breite der Hartmetallspitze entspricht.

Überraschend ergibt sich mit der erfindungsgemäßen Ausgestaltung des Steinbohrers ein größerer Bohrfortschritt immer gerade auch beim Auftreffen auf die Armierung in Beton. Es ist anzunehmen, daß die erfindungsgemäße Hartmetallplatte die Armierung scharfkantig anritzt, so daß sie beim nächsten Schlag des Hammerbohrers leichter zerschlagen werden kann. Durch die Einschnürung wird offenbar zudem die Bohrmehlabfuhr verbessert.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine Seitenansicht eines erfindungsgemäßen Steinbohrers in einem Ausführungsbeispiel;
- Fig. 2: eine vergrößerte Ansicht eines Teils der Ausführungsform gemäß Fig. 1; und
- Fig. 3: eine Stirnansicht einer Hartmetallplatte für die Verwendung in einem Steinbohrer gemäß den Figuren 1 und 2.

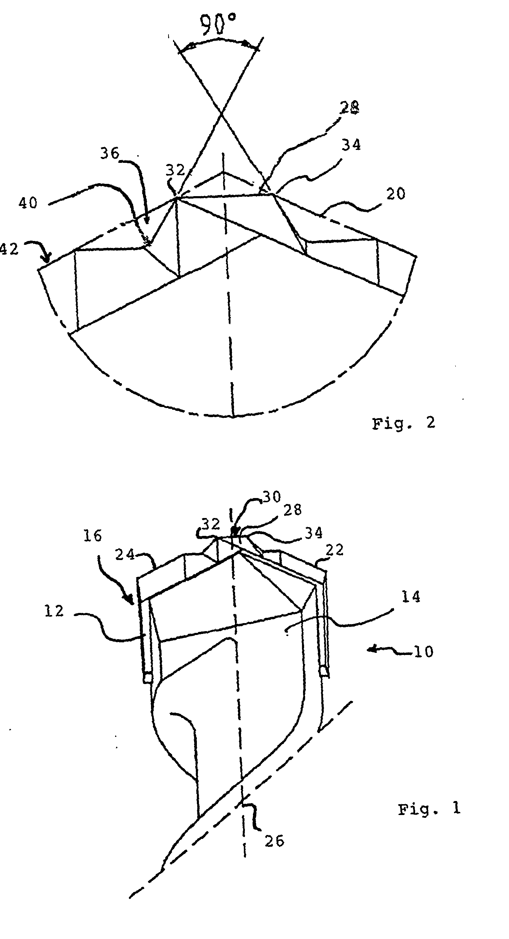

Der in Fig. 1 dargestellte Steinbohrer 10 weist eine Hartmetallplatte 12 auf, die in einen in der Bohrerspitze 14 eingefrästen Schlitz 16 eingelötet ist.

Die erfindungsgemäße Hartmetallplatte ist in besonderer Weise ausgebildet. Sie weist einen Spitzenwinkel von 130 Grad auf, wobei der Spitzenwinkel eine Hüllkurve 20 bildet, die bei der Drehung der Hartmetallplatte von Nebenschneiden 22, 24 und in der Verlängerung dieser bis zur Achse 26 des Bohrers überstrichen wird.

Die Hartmetallplatte 12 weist eine Hartmetallspitze 28 auf, über die sich die Hauptschneide 30 erstreckt. Die Hartmetallspitze ist erfindungsgemäß innerhalb der Hüllkurve 20 angeordnet, und zwar vollständig dergestalt, daß die äußeren Enden 32, 34 der Hauptschneide 30 gerade die Hüllkurve 20 tangieren, aber sie nicht durchtreten. Dies ist besser aus Fig. 2 ersichtlich.

Seitlich neben der Hartmetallspitze 28 ist dementsprechend je eine Einschnürung 36 vorgesehen, wobei die Einschnürung 36 sich in axialer Richtung betrachtet über etwas mehr als die Breite der Hartmetallspitze 28 erstreckt. An ihrem Grund weist sie einen Radius 40 auf, der deutlich geringer als die Tiefe der Einschnürung ist, beispielsweise ein Drittel der Tiefe. Die Einschnürung ist im wesentlichen symmetrisch ausgebildet, wobei der Spitzenwinkel der Hartmetallspitze 28 etwa 90 Grad beträgt, so daß eine gute Zentrierfunktion bereitgestellt wird, aber dennoch die Schneidenkontur 42 durch die Einschnürung 36 nicht wesentlich verlängert wird.

Wie besser aus Fig. 1 ersichtlich ist, ist die Hartmetallspitze 28 in einer den Nebenschneiden 22 und 24 entsprechenden Weise von der umgebenden Bohrerspitze 14, also dem dort vorhandenen Stahl, abgestützt.

Dementsprechend besteht keine Möglichkeit für die Hartmetallspitze, hier abzubrechen, so daß der erfindungsgemäße Steinbohrer langlebig und robust ist.

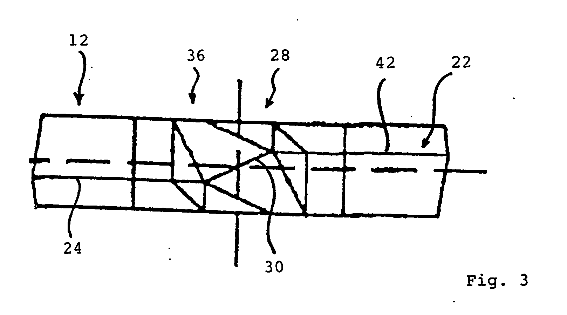

Aus Fig. 3 ist ersichtlich, in welcher Weise die Schneidkante 42 geführt ist. Die Schneidkante 42 weist axial betrachtet den gleichen Verlauf auf wie eine handelsübliche Hartmetallplatte ohne Einschnürung. Die Einschnürung ist praktisch lediglich nur durch zwei prismatische Einsatzkörper in der Sinterform für die Hartmetallplatte gebildet, deren Ausgestaltung aus Fig. 3 ersichtlich ist.

Es versteht sich, daß die erfindungsgemäße Lösung nicht auf das dargestellte Ausführungsbeispiel beschränkt ist. Beispielsweise ist es gemäß einer alternativen Ausgestaltung auch ohne weiteres möglich, die Breite der Hartmetallspitze, die hier bevorzugt etwa 15% der Breite der Hartmetallplatte beträgt, zu variieren. Sie kann beispielsweise etwa auf ein Drittel der Breite der Hartmetallplatte verbreitert werden, wobei erfindungsgemäß wesentlich ist, daß die Hartmetallspitze innerhalb der Hüllkurve 20 verbleibt.

## Patentansprüche

1. Steinbohrer, mit einer Hartmetallplatte (12), die sich quer durch einen Schlitz in der Bohrerspitze erstreckt und dort verankert ist, wobei die Hartmetallplatte (12) eine Hartmetallspitze (28) mit Hauptschneide (30) aufweist, und wobei seitlich der Hauptschneide (30) Nebenschneiden (22, 24) ausgebildet sind, **dadurch gekennzeichnet, dass** die Kontur der Hartmetallplatte (12) durch eine Hüllkurve (20) definierbar ist, welche bei der Drehung der Hartmetallplatte (12) durch die Nebenschneiden (22, 24) und in Verlängerung dieser bis zur Bohrerachse (26) hin definiert ist, wobei die Enden (32, 34) der Hauptschneide (30) die Hüllkurve (20) tangieren, so dass die Hartmetallspitze (28) innerhalb der Hüllkurve (20) liegt, dass die Hauptschneide (30) und die Nebenschneiden (22, 24) einen kontinuierlichen Verlauf aufweisen, und dass die Hüllkurve (20) einen Spitzenwinkel von etwa 130° aufweist.

2. Steinbohrer nach Anspruch 1
**dadurch gekennzeichnet, dass** die Hartmetallspitze (28) einen Spitzenwinkel von weniger als 130 Grad, insbesondere von 90 Grad, aufweist.

3. Steinbohrer nach einem der vorhergehenden Ansprüche,
**dadurch gekennzeichnet, dass** die Hauptschneide (30) der Hartmetallplatte (12) sich quer über die Hartmetallspitze (28) erstreckt.

4. Steinbohrer nach einem der vorhergehenden Ansprüche,
**dadurch gekennzeichnet, dass** die Hartmetallplatte (12) zur Hartmetallspitze (28) hin eine Einschnürung (36) aufweist, an welcher sie gegenüber der Hüllkurve (20) zurückspringt.

5. Steinbohrer nach Anspruch 4,
**dadurch gekennzeichnet, dass** die Einschnürung (36) eine in axialer Richtung weisende Kante und eine schräg nach außen weisende Kante aufweist und der Übergang zwischen diesen durch einen Radius (40) gebildet ist, der wesentlich kleiner als die Länge der beiden Kanten ist.

6. Steinbohrer nach einem der vorhergehenden Ansprüche,
**dadurch gekennzeichnet, dass** die Hartmetallplatte (12) sich vorzugsweise über die Hälfte ihrer radialen Länge in einem Spitzenwinkel von 130 Grad erstreckt und die Breite der Hartmetallspitze (28) zwischen 8 und 30% und insbesondere im Wesentlichen 15% der Breite der Hartmetallplatte (12) beträgt.

7. Steinbohrer nach einem der Ansprüche 4 oder 5,
**dadurch gekennzeichnet, dass** die Hartmetallplatte (12) eine Schneidenkontur (42) aufweist, die gegenüber einer üblichen Hartmetallplatte (12) im Bereich der Einschnürung (36) zurückspringt, wobei das Rücksprungmaß vorzugsweise ein Drittel der Breite der Hartmetallspitze (28) beträgt.

8. Steinbohrer nach einem der Ansprüche 4, 5 oder 7,
**dadurch gekennzeichnet, dass** über den radialen Verlauf der Hartmetallplatte (12) lediglich eine Stufe vorgesehen ist, die die Einschnürung (36) bildet.

## Claims

1. Stone drill, with a cemented-carbide tip (12) which extends transversely through a slot in the drill point and is anchored here, wherein the cemented-carbide tip (12) has a cemented-carbide point (28) with a major cutting edge (30), and wherein minor cutting edges (22, 24) are formed laterally of the major cutting edge (30),
**characterised in that** the contour of the cemented-carbide tip (12) can be defined by an envelope curve (20) which is defined upon rotating the cemented-carbide tip (12) by the minor cutting edges (22, 24) and in an extension of these up to the drill axis (26), wherein the ends (32, 34) of the major cutting edge (30) are at a tangent to the envelope curve (20), so that the cemented-carbide point (28) lies inside the envelope curve (20), that the major cutting edge (30) and the minor cutting edges (22, 24) extend in a continuous manner, and that the envelope curve (20) has an apex angle of approximately 130°.

2. Stone drill according to Claim 1,
**characterised in that** the cemented-carbide point (28) has an apex angle of less than 130 degrees, in particular of 90 degrees.

3. Stone drill according to either of the preceding Claims,
**characterised in that** the major cutting edge (30) of the cemented-carbide tip (12) extends transversely over the cemented-carbide point (28).

4. Stone drill according to any one of the preceding Claims,
**characterised in that** the cemented-carbide tip (12) has a contraction (36) towards the cemented-carbide point (28) at which it is set back with respect to the envelope curve (20).

5. Stone drill according to Claim 4,
**characterised in that** the contraction (36) has an edge which points in the axial direction and an edge which points obliquely outwards, and the transition between these is formed by a radius (40) which is substantially smaller then the length of the two edges.

6. Stone drill according to any one of the preceding Claims,
**characterised in that** the cemented-carbide tip (12) preferably extends over half of its radial length in an apex angle of 130 degrees, and the width of the cemented-carbide point (28) is between 8 and 30% and in particular substantially 15% of the width of the cemented-carbide tip (12).

7. Stone drill according to either of Claims 4 and 5,
**characterised in that** the cemented-carbide tip (12) has a cutting edge contour (42) which is set back with respect to a conventional cemented-carbide tip (12) in the region of the contraction (36), wherein the extent of the setback is preferably one third of the width of the cemented-carbide point (28).

8. Stone drill according to any one of Claims 4, 5 and 7,
**characterised in that** just one step, which forms the contraction (36), is provided over the radial path of the cemented-carbide tip (12).

## Revendications

1. Foret pour la pierre comportant une plaquette de carbure (12) qui s'étend transversalement à travers une fente dans la pointe du foret et qui est ancrée à cet emplacement, la plaquette de carbure (12) comportant une pointe en carbure (28) une arête de coupe (30) et des arêtes de coupe secondaires (22, 24) étant réalisées latéralement à l'arête de coupe principale (30) **caractérisé en ce que** le contour de la plaquette de carbure (12) peut être défini par une enveloppe (20) qui, lors de la rotation de la plaquette de carbure (12), est définie par les arêtes de coupe secondaires (22, 24) et dans le prolongement de celles-ci jusqu'à l'axe du foret (26), les extrémités (32, 34) de l'arête de coupe principale (30) étant tangentes à l'enveloppe (20), de telle sorte que la pointe en carbure (28) est située à l'intérieur de l'enveloppe (20), **en ce que** avec l'arête de coupe principale (30) et les arêtes de coupe secondaires (22, 24) ont un tracé continu et **en ce que** l'enveloppe (20) a un angle de pointe d'environ 130°.

2. Foret pour la pierre selon la revendication 1, **caractérisé en ce que** la pointe en carbure (28) a un angle de pointe inférieur à 130°, en particulier de 90°.

3. Foret pour la pierre selon l'une quelconque des revendications précédentes, **caractérisé en ce que** l'arête de coupe principale (30) de la plaquette de carbure (12) s'étend transversalement sur la pointe en carbure (28).

4. Foret pour la pierre selon l'une quelconque des revendications précédentes, **caractérisé en ce que** la plaquette de carbure (12) comporte en direction de la pointe en carbure (28) une gorge (36), au niveau de laquelle elle est en retrait par rapport à l'enveloppe (20).

5. Foret pour la pierre selon la revendication 4, **caractérisé en ce que** la gorge (36) comporte un côté orienté dans la direction axiale et un côté incliné vers l'extérieur et la transition entre ceux-ci est formée par un rayon (40) qui est sensiblement plus faible que la longueur des deux côtés.

6. Foret pour la pierre selon l'une quelconque des revendications précédentes, **caractérisé en ce que** la plaquette de carbure (12) s'étend de préférence sur la moitié de sa longueur radiale en formant un angle de pointe de 130° et la largeur de la pointe en carbure (28) se situe entre 8 et 30 %, et en particulier 15 % de la largeur de la plaquette de carbure (12).

7. Foret pour la pierre selon la revendication 4 ou 5, **caractérisé en ce que** la plaquette de carbure (12) comporte un contour de l'arête de coupe principale (42) qui, par rapport à une plaquette de carbure (12) usuelle, est en retrait dans la zone de la gorge (36), la valeur du retrait étant de préférence un tiers de la largeur de la pointe en carbure (28).

8. Foret pour la pierre selon l'une quelconque des revendications 4, 5 ou 7, **caractérisé en ce que**, sur l'extension radiale de la plaquette de carbure (12), il est prévu un seul décrochement qui forme la gorge (36).
